# EUROPEAN PATENT APPLICATION

(11) **EP 2 072 242 A1**
(43) Date of publication of application: **24.06.2009**
(21) Application number: 08253365.4
(22) Date of filing: 16.10.2008
(51) Int. Cl.: B32B 1/00, B32B 5/00

(54) **Molded article with tactility**

(30) Priority: 20.12.2007 CN 200710203284
(71) Applicant: FIH (Hong Kong) Limited, Hong Kong (HK)
(72) Inventor: Wu, Kun-Tsan, Shindian City Taipei Hsien Taiwan 231 (CN); Tien, Li-Wen, Shindian City Taipei Hsien Taiwan 231 (CN)
(74) Representative: Craven, Ian

(57) **Abstract**

A molded article (10) for being provided with tactility is provided. The molded article includes a base shell (14), a soft layer (12) directly formed on the base shell, and a dustproof layer (11) directly formed on the soft layer. The soft layer has a joining surface (122) configured for being rough so as to join with the exterior surface of the base shell.

## Description

### BACKGROUND OF THE INVENTION

### 1. Field of the Invention

The present invention relates to molded articles, particularly to a molded article with textured surface.

### 2. Description of Prior Art

Molded articles, such as molded shells, are widely used in many technological fields. Such molded shells can be used for shielding internal electronic components of a portable electronic device (e.g., a mobile phone).

Typically, the molded shell used for the portable electronic device is a plastic article molded by a typical insert molding process. In order to achieve a good tactility, the exterior surface of the molded shell usually has a soft layer formed thereof. The soft layer can be made of materials selected from a leather and a fabric. The soft layer is typically adhered on the exterior surface by adhesive or hot-melt glue films.

However, such adhering tends to damage the soft layer and the exterior surface , which enables the soft layer to detach from the exterior surface.

Therefore, a heretofore-unaddressed need exists in the art to address the aforementioned deficiencies and inadequacies.

### SUMMARY OF THE INVENTION

In one embodiment thereof, a molded article for being provided with tactility is provided. The molded article includes a base shell, a soft layer directly formed on the base shell, and a dustproof layer directly formed on the soft layer. The soft layer has a joining surface configured for being rough so as to join with the exterior surface of the base shell..

Other advantages and novel features will become more apparent from the following detailed description when taken in conjunction with the accompanying drawings.

### BRIEF DESCRIPTION OF THE DRAWINGS

Many aspects of the present molded article with tactility can be better understood with reference to the following drawing. The drawing is not necessarily drawn to scale, the emphasis instead being placed upon clearly illustrating the principles of the present molded article. Moreover, in the drawing like reference numerals designate corresponding parts throughout the view. Wherever possible, the same reference numbers are used throughout the drawing to refer to the same or like elements of an embodiment.

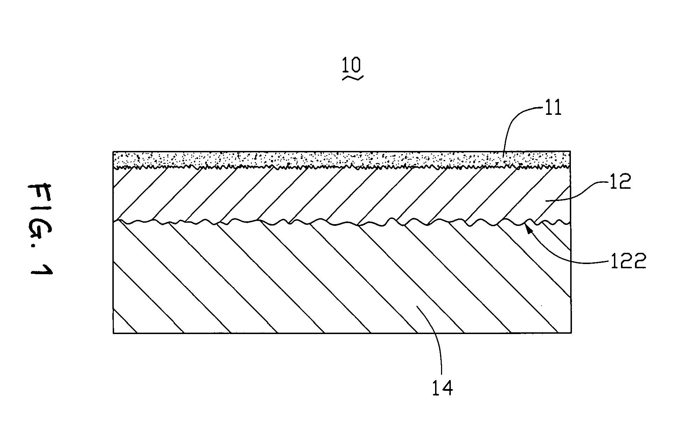

FIG 1 is a cross-sectional view of a molded article with a textured surface according with a present embodiment.

### DETAILED DESCRIPTION OF THE INVENTION

The present molded article is exemplified by a molded shell, which is described here in conjunction with FIG. 1. The molded shell is suitably used in the electronic device such as the mobile phone, the personal digital handset, or the like.

Referring to FIG. 1, the molded shell 10 includes a base shell 14 and two layers formed on the base shell 14. That is the base shell 14 has a soft layer 12 and a dustproof layer 11 formed thereon. The soft layer 12 is disposed between the base shell 14 and the dustproof layer 11.

The dustproof layer 11 is made of a nanophase material. Alternatively, the dustproof layer 11 can be a dustproof coating coated on the soft layer 12. The nanophase material can be one of a fluorinated organosilicon nanophase material, a silicon nitride nanophase material, and an aluminium nitride nanophase material. The dustproof coating can be made of materials selected from an ethoxyline resin dustproof coating and a polyurethane dustproof coating.

The soft layer 12 can be made of one of a leather material, a fabric material, or a cloth material, e.g., a natural leather material, a man-made leather material, a cotton fabric material, a wool fabric material, a plastic fabric material, or a nylon material. Beneficially, the soft layer 12 can be made of one material selected from a man-made leather material, cotton fabric material, and a nylon material.

The soft layer 12 has an exterior joining surface 122 joining with a corresponding exterior surface (not labeled) of the base shell 14. The joining surface 122 has a plurality of capillary structures (not shown) structured and/or arranged therewith, which appears to be rough. Originally, the soft layer 12 made of the cotton fabric material is rough. However, if the soft layer 12 is made of the man-made leather material, which is not rough in the original state, the soft layer 12 requires to be surface treated (e.g., grinded) to achieve a rough surface.

The base shell 14 can be molded by injection mold. The material for the base shell 14 can be injecting materials such as plastic materials, rubber materials, silicon materials, and so on. The plastic materials may be one or more materials selected from a group consisting of a polyvinyl chloride (PVC), an acrylonitrile-butadiene-styrene (ABS), a polycarbonate (PC), a polystyrene, a polypropylene, and a polyurethane.
Beneficially, the plastic material can be the ABS material or the PC material.

In manufacturing of the molded shell 10, the base shell 14 is insert molded with the soft layer 12 by a typical insert molding decorating (IMD) technology. The soft layer 12 is grinded to be rough. The dustproof layer 11 is directly formed on an exterior surface of the soft layer 12 via spray painting. Advantageously, the dustproof layer 11 is directly spray painted on an exterior surface of the soft layer 12.

One main advantage of the present embodiment embodies that the joining of the soft layer 12 and the base shell 14 is enforced. Thus, the soft layer 12 may not be easily detached from the base shell 14.

Another main advantage of the present embodiment reflects that the dustproof layer 11 can maintain a long-lasting clean appearance of the molded shell 10.

It is to be understood, however, that even through numerous characteristics and advantages of the present invention have been set forth in the foregoing description, together with details of the structure and function of the invention, the disclosure is illustrative only, and changes may be made in detail, especially in matters of shape, size, and arrangement of parts within the principles of the invention to the full extent indicated by the broad general meaning of the terms in which the appended claims are expressed.

## Claims

1. A molded article for being provided with tactility, comprising:
a base shell;
a soft layer directly formed on the base shell, the soft layer comprising a joining surface, the joining surface configured for being rough so as to join with the exterior surface of the base shell; and
a dustproof layer directly formed on the soft layer, the soft layer being disposed between the base shell and the dustproof layer.

2. The molded article as claimed in claim 1, wherein the soft layer is made of one of a leather material, a fabric material, or a cloth material.

3. The molded article as claimed in claim 2, wherein the soft layer is made of one material selected from a group consisting of a natural leather material, a man-made leather material, a cotton fabric material, a wool fabric material, a plastic fabric material, and a nylon material.

4. The molded article as claimed in claim 1, wherein the joining surface is originally or surface treated to be rough.

5. The molded article as claimed in claim 4, wherein the joining surface is originally rough as the soft layer is made of a cotton fabric material.

6. The molded article as claimed in claim 4, wherein the joining surface is surface treated to be rough as the soft layer is made of a man-made leather material.

7. The molded article as claimed in claim 4, wherein the joining surface is provided with a plurality of capillary structures.

8. The molded article as claimed in claim 1, wherein the base shell is made of one of a plastic material, a rubber material, and a silicon material.

9. The molded article as claimed in claim 1, wherein the dustproof layer is made of a nanophase material.

10. The molded article as claimed in claim 9, wherein the nanophase material is one of a fluorinated organosilicon nanophase material, a silicon nitride nanophase material, and an aluminium nitride nanophase material.

11. The molded article as claimed in claim 1, wherein the dustproof layer is a dustproof coating which is coated on the soft layer.

12. The molded article as claimed in claim 11, wherein the dustproof coating is one of an ethoxyline resin dustproof coating and a polyurethane dustproof coating.
